# EUROPÄISCHE PATENTSCHRIFT

(11) **EP 2 735 535 B1**
(45) Veröffentlichungstag und Bekanntmachung des Hinweises auf die Patenterteilung: **14.01.2015**
(21) Anmeldenummer: 12194031.6
(22) Anmeldetag: 23.11.2012
(51) Int. Cl.: B65H 54/28, F16F 7/08

(54) **Fadenführereinheit, Bewegungsdämpfer für eine Fadenführereinheit sowie Verfahren zum Herstellen des Bewegungsdämpfers**
Thread guide unit, motion damper for a thread guide unit and method for producing the motion damper
Unité guide-fil, amortisseur de mouvement pour une unité guide-fil et procédé de fabrication de l'amortisseur de mouvement

(43) Veröffentlichungstag der Anmeldung: 28.05.2014
(73) Patentinhaber: SSM Schärer Schweiter Mettler AG, 8812 Horgen (CH)
(72) Erfinder: Leu Erwin, 8810 Horgen (CH)
(74) Vertreter: Kohler Schmid Möbus

(56) Entgegenhaltungen:
- EP-A1- 0 302 461
- EP-A1- 1 209 114
- DE-A1- 10 306 232
- DE-U1- 29 504 620
- JP-A- 2010 249 224
- US-A1- 2003 159 684

## Beschreibung

Die Erfindung betrifft eine Fadenführereinheit, einen Bewegungsdämpfer für eine Fadenführereinheit sowie ein Verfahren zum Herstellen des Bewegungsdämpfers.

In der Textilbranche werden, insbesondere bei Spul- bzw. Umspulmaschinen, Fadenführereinheiten eingesetzt, die ein seil- riemen- oder litzenartiges Zugmittel aufweisen, an dem der Fadenführer befestigt ist. Das Zugmittel ist mittels eines Antriebs in schneller Folge changierend hin- und herbewegbar und im konstruktiv einfachsten Fall um zumindest eine Umlenkrolle und eine Spannrolle geführt. Die Spannrolle ist in der Regel über einen Schlitten an einem Lagerteil, beispielsweise einer Lagerplatte, der Fadenführereinheit entlang einer Bewegungsachse relativ zum Lagerteil verschiebbar angeordnet. Die Spannrolle ist durch ein mit der Spannrolle zusammenwirkendes Vorspannelement in einer das Zugmittel spannenden Spannstellung vorgespannt gehalten. Im Betrieb solcher Zugmittel-basierter Fadenführereinheiten wird das Zugmittel hohen dynamischen und statischen Belastungen ausgesetzt. Durch die schnelle Folge der Richtungsumkehr der als Antriebsrad für das Zugmittel wirkenden Umlenk- oder Spannrolle können Schwingungen in der Fadenführereinheit entstehen, durch die zusätzliche Kräfte auf das Zugmittel ausgeübt werden. Dies ist für die Standzeit des Zugmittels von Nachteil und macht oftmals allzu enge Service- bzw. Reparaturintervalle der Fadenführereinheit erforderlich.

Aufgabe der Erfindung ist es, eine eingangs genannte Fadenführereinheit und einen Bewegungsdämpfer für die Fadenführereinheit anzugeben, die eine zuverlässige Dämpfung unerwünschter Schwingungen in der Fadenführereinheit und so eine verbesserte Standzeit des eingesetzten Zugmittels ermöglichen. Es ist weiterhin Aufgabe der Erfindung, ein Verfahren zur Herstellung des Bewegungsdämpfers anzugeben.

Die die Fadenführereinheit betreffende Aufgabe wird durch einen Fadenführer mit den im Patentanspruch 1 angegebenen Merkmalen und die den Bewegungsdämpfer betreffende Aufgabe wird durch einen Bewegungsdämpfer mit den in Patentanspruch 15 angegebenen Merkmalen gelöst.

Das erfindungsgemäße Verfahren zum Herstellen des Bewegungsdämpfers weist die in Patentanspruch 16 angegebenen Merkmale auf.

Die erfindungsgemäße Fadenführereinheit zeichnet sich bei einem einfachen konstruktiven Aufbau durch eine zuverlässige Dämpfung von schwingungsbedingten Auslenkbewegungen der Spannrolle aus ihrer Spannstellung aus. Dadurch können auf das Zugmittel einwirkende Kräfte begrenzt und die Standzeit des Zugmittels der Fadenführereinheit insgesamt vergrößert werden. Durch die zur Reibfläche schräg verlaufend ausgerichteten Dämpferlamellen des Dämpferelements kann die Auslenkbewegung der Spannrolle aus ihrer Spannstellung dabei insgesamt stärker gedämpft werden, als die für das zuverlässige Spannen des Zugmittels wesentliche Rückstellbewegung der Spannrolle in ihre Spannstellung. Der Bewegungsdämpfer weist somit einen richtungsspezifisches Dämpfungsverhalten auf. Durch das zumindest abschnittsweise Aufrichten der Dämpferlamellen können sich diese zwischen ihrem fußseitigen Widerlager und der Reibfläche verkeilen. Dadurch wird eine Flächenpressung zwischen den Dämpferlamellen und der Reibfläche vergrößert, wodurch die Reibung zwischen dem Dämpferelement und der Reibfläche vergrößert wird.

Bei der Rückstellbewegung der Spannrolle in ihre Spannstellung werden die Dämpferlamellen durch die Relativbewegung der freien Enden der Dämpferlamellen und der Reibfläche gegenüber der Reibfläche weiter abgeklappt. Die Dämpferlamellen liegen dadurch an der Reibfläche mit einer geringeren Kraft an, was eine geringere Haft- bzw. Gleitreibung zwischen dem Bewegungsdämpfer und der Reibfläche zur Folge hat. Dadurch kann die Rückstellbewegung der Spannrolle in ihre Spannstellung gegen einen verringerten Reibwiderstand erfolgen.

Die Reibfläche kann durch ein gegenüber der Spannrolle fest stehendes Lagerteil, beispielsweise eine Lagerplatte, der Fadenführereinheit oder aber an einem Schlitten ausgebildet sein, über den die Spannrolle relativ zum Lagerteil verschiebbar am Lagerteil angeordnet ist. Im erstgenannten Fall ist der Bewegungsdämpfer synchron mit der Spannrolle gegenüber dem Lagerteil verschiebbar angeordnet. Der Bewegungsdämpfer kann dabei an dem Schlitten der Spannrolle angeordnet sein bzw. als (Lager-)Schlitten der Spannrolle dienen. Im letztgenannten Fall ist der Bewegungsdämpfer an dem ortsfesten Lagerteil der Fadenführereinheit befestigt.

Nach einer bevorzugten Weiterbildung der Erfindung weisen die Dämpferlamellen an ihren freien Enden jeweils zumindest eine Kante auf. Dadurch können die Dämpferlamellen bei einer Auslenkbewegung der Spannrolle besonders wirkungsvoll mit der Reibfläche verkanten.

Die Dämpferlamellen sind bevorzugt in Richtung einer Bewegungsachse der Spannrolle hintereinander aufgereiht angeordnet. Dadurch können sich die Dämpferlamellen bei einer mit dem Verschieben der Spannrolle in Auslenkrichtung einhergehenden axialen Belastung aneinander abstützen. Einem Umknicken einzelner Dämpferlamellen kann dadurch auf konstruktiv einfache Weise entgegengewirkt werden.

Die Lamellen sind dabei- im unbelasteten Zustand des Bewegungsdämpfers - vorzugsweise mit einem einheitlichem Abstand voneinander beabstandet angeordnet. Der Abstand kann insbesondere weniger als 0,5 mm, insbesondere weniger als 0,3 mm betragen. Zwischen den einzelnen Dämpferlamellen sind somit schlitzförmige Spalten angeordnet.

Die Lamellen können insbesondere eine, vorzugsweise einheitliche, Dicke von 1 mm bis 4 mm, bevorzugt von ungefähr 2 mm, aufweisen. Die Lamellen weisen eine, bevorzugt einheitliche, Länge von 5 bis 10 mm auf.

Das elastisch verformbare Dämpferelement besteht erfindungsgemäß bevorzugt aus einem Kunststoff. Als besonders vorteilhaft hat sich diesbezüglich ein Polyolefin, insbesondere ein Polyurethan erwiesen. Der Kunststoff kann dabei einen oder mehrere Zuschlagstoffe (Additive) wie beispielsweise Feinanteile oder auch Faserstoffe, enthalten. Dadurch kann die Verschleißfestigkeit des Dämpferelements und auch dessen Oberflächenbeschaffenheit im Hinblick auf eine gewünschte Reibungskraft des Dämpferelements an der Reibfläche bedarfsgerecht eingestellt werden.

Nach einer besonders bevorzugten Weiterbildung der Erfindung besteht das Dämpferelement aus einem, insbesondere geschlossenzelligen, Schaummaterial. Dadurch kann der Bewegungsdämpfer mit nochmals weiter verbesserten Dämpfungseigenschaften realisiert werden.

Der Bewegungsdämpfer kann nach einer besonders bevorzugten Weiterbildung der Erfindung aus einem Elastomer, insbesondere aus Gummi, bestehen.

Unter fertigungstechnischen Gesichtspunkten hat es sich als vorteilhaft erwiesen, wenn der Bewegungsdämpfer ein Gehäuse für das Dämpferelement aufweist. Dadurch kann die Montage des Bewegungsdämpfers insgesamt erleichtert werden. Darüber hinaus kann ein ggf. erforderlicher Austausch/Ersatz des Dämpferelements ohne großen Aufwand ermöglicht werden.

Das Dämpferelement kann nach der Erfindung in der Gehäuseaufnahme lose eingelegt oder in der Gehäuseaufnahme zumindest abschnittsweise im Presssitz gehalten angeordnet sein. Das Dämpferelement ist dabei vorzugsweise in Längsrichtung des Bewegungsdämpfers spielfrei in der Aufnahme gehalten angeordnet. Dadurch kann eine Auslenkung (ein Verschieben) der Spannrolle aus ihrer Spannstellung von Beginn an gedämpft und so unerwünschten Schwingungen in der Fadenführereinheit effizient entgegengewirkt werden. Die Belastungen, insbesondere des Zugmittels, beim Durchschreiten der Eigenfrequenz kann dadurch entscheidend vermindert werden.

Das Dämpferelement kann nach der Erfindung vorzugsweise mit einer variabel einstellbaren Vorspannung gegen die Reibfläche vorspannbar, d.h., mit einer variabel einstellbaren Anpresskraft an die Reibfläche pressbarsein. Dadurch kann eine Haft- und Gleitreibung zwischen dem Bewegungsdämpfer und der zugeordneten Reibfläche und somit ein jeweiliger Dämpfungsgrad der Auslenkbewegung der Spannrolle aus ihrer Spannstellung auf ein gewünschtes Maß eingestellt werden.

Nach der Erfindung kann der Bewegungsdämpfer auch zwei oder mehr Dämpfungselemente aufweisen. In diesem Fall sind die Dämpfungselemente vorzugsweise mit zueinander gleichgerichteten Lamellen und insbesondere parallel zueinander im Gehäuse angeordnet.

Nach einer besonders bevorzugten Weiterbildung der Erfindung ist die Spannrolle gemeinsam mit dem Bewegungsdämpfer entlang einer Bewegungsachse verschiebbar angeordnet. Der Bewegungsdämpfer kann insbesondere als (Lager-)Schlitten für die Spannrolle ausgebildet sein.. Es versteht sich, dass die Fadenführereinheit auch mehrere Umlenkrollen bzw. Spannrollen aufweisen kann. Es versteht sich, dass mehrere der Umlenk- bzw. Spannrollen als Antriebsrollen ausgebildet sein können.

Der erfindungsgemäße Bewegungsdämpfer für die vorgenannte Fadenführereinheit weist eine Mehrzahl von Dämpferlamellen auf und ist bei einfachem konstruktiven Aufbau kostengünstig zu fertigen. Der Bewegungsdämpfer zeichnet sich durch richtungsabhängige Dämpfungseigenschaften aus.

Das erfindungsgemäße Herstellungsverfahren ermöglicht eine einfache und kostengünstige Fertigung des Bewegungsdämpfers.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden.

Nachfolgend wird die Erfindung anhand eines in der Zeichnung wiedergegebenen Ausführungsbeispiels näher erläutert. Die gezeigten und beschriebenen Ausführungsformen sind nicht als abschließende Aufzählung zu verstehen, sondern haben für die Schilderung der Erfindung vielmehr beispielhaften Charakter.

Die Figuren der Zeichnung zeigen den erfindungsgemäßen Gegenstand stark schematisiert und sind nicht maßstäblich zu verstehen. Die einzelnen Bestandteile des erfindungsgemäßen Gegenstands sind so dargestellt, dass ihr Aufbau gut gezeigt werden kann.

In der Zeichnung zeigen:
- Fig. 1: eine Fadenführereinheit mit einem Zugmittel, das um eine Umlenkrolle und eine Spannrolle geführt ist, wobei die Spannrolle gegen die Kraft eines Vorspannelements entlang einer Bewegungsachse aus ihrer gezeigten Spannstellung in auslenkbar ist, und mit einem Bewegungsdämpfer für die Spannrolle, der ein mit Dämpferlamellen versehenes Dämpferelement aufweist, in einer Seitenansicht;
- Fig. 2: das Dämpferelement des Bewegungsdämpfers aus Fig. 1 in Spannstellung der Spannrolle, in einer perspektivischen Ansicht;
- Fig. 3: das Dämpferelement des Bewegungsdämpfers aus Fig. 1 bei einer Auslenkbewegung der Spannrolle, in einer perspektivischen Ansicht;
- Fig. 4: das Dämpferelement aus Fig. 1 bei einer Rückstellbewegung der Spannrolle in ihren Spannstellung, in einer perspektivischen Ansicht;
- Fig. 5: eine Fadenführereinheit, bei der die Spannrolle zusammen mit dem Bewegungsdämpfer entlang der Bewegungsachse verschiebbar angeordnet ist, in Seitenansicht;
- Fig. 6: den Bewegungsdämpfer aus Fig. 5, in einer Draufsicht auf dessen Dämpferelemente, und
- Fig. 7: einzelne Verfahrensschritte eines erfindungsgemäßen Verfahrens zum Herstellen eines Bewegungsdämpfers aus Fig. 1 und Fig. 5.

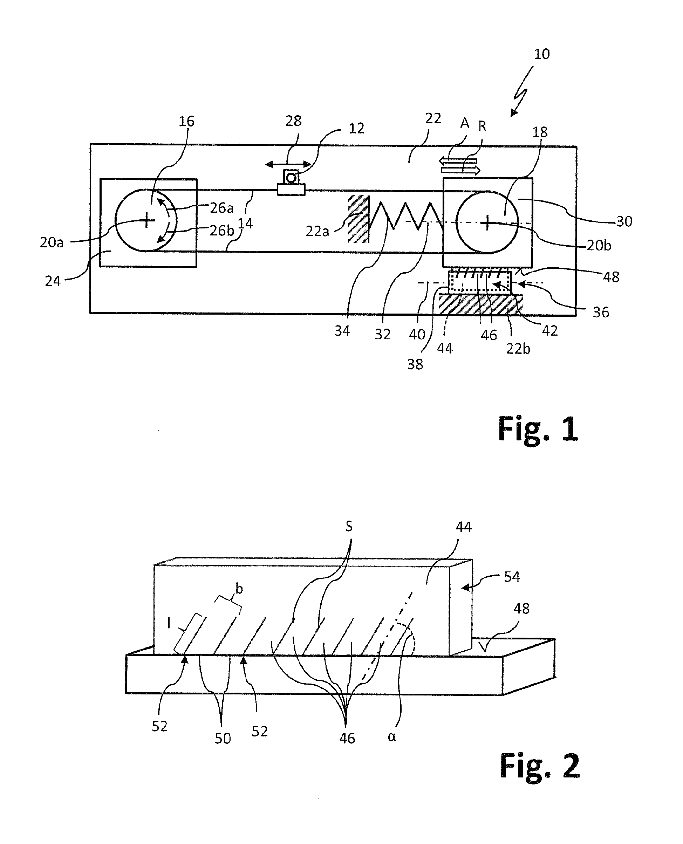

**Fig. 1** zeigt eine Fadenführereinheit **10** mit einem Fadenführer **12,** der an einem seilförmigen Zugmittel **14** befestigt ist. Das Zugmittel 14 umschlingt eine Umlenkrolle **16** und eine Spannrolle **18,** die jeweils um Drehachsen **20a, 20b** verdrehbar an einem plattenförmigen Lagerteil **22** der Fadenführereinheit 10 gelagert sind. Das Zugmittel 14 kann, wie vorliegend gezeigt, endlos ausgebildet sein. Die Umlenkrolle 16 ist mittels eines Antriebsmotors **24** in einander entgegengesetzte Drehrichtungen **26a, 26b** um ihre Drehachse 20a antreibbar und dient somit als eine Antriebsrolle für das Zugmittel 14. Der Fadenführer 12 ist dadurch mittels des Zugmittels 14 in mit dem Doppelpfeil **28** gekennzeichnete Changierrichtungen in schneller Folge hin- und her bewegbar, beispielsweise um einen am Fadenführer 12 geführten Faden auf einem Spulenkörper aufzuwickeln (nicht gezeigt).

Wie aus Fig. 1 hervorgeht, ist die Spannrolle 18 über einen Schlitten **30** entlang einer Bewegungsachse **32** relativ zum Lagerteil 22 der Fadenführereinheit 10 verschiebbar gelagert. Die Spannrolle 18 ist durch ein elastisch verformbares Vorspannelement **34,** hier eine Druckfeder, in einer das Zugmittel 14 spannenden Spannstellung gehalten. Die Druckfeder ist einenends an einem, beispielsweise durch das Lagerteil 22 gebildeten, Festlager **22a** abgestützt und greift anderenends an dem Schlitten 30 an. Durch das Vorspannelement 34 kann die Spannung des Zugmittels14 in einfacher Weise in einem definiertem Toleranzbereich gehalten werden. Das Vorspannelement kann auch in anderer Weise ausgebildet sein. Die Spannrolle 18 ist entlang ihrer Bewegungsachse 32 in Auslenkrichtung A aus ihrer gezeigten Spannstellung gegenüber dem Lagerteil 22 auslenkbar.

Die für die Changierbewegung des Fadenführers 12 erforderlichen Richtungswechsel der Drehbewegung der Antriebs- bzw. Umlenkrolle 16 können Schwingungen der Fadenführereinheit 10 entstehen, die sich auf den Schlitten 30 mit der Spannrolle 18 übertragen. Durch diese Schwingungen kann insbesondere das Zugmittel 14 mit Kräften beaufschlagt werden, die zu einem frühzeitigen Verschleiß bzw. einem Versagen des Zugmittels 14 führen können.

Der Spannrolle 18 ist deshalb mit einem im Wesentlichen richtungsselektiv wirkenden Bewegungsdämpfer **36** versehen. Der Bewegungsdämpfer 36 ist bei dem in Fig. 1 gezeigten Ausführungsbeispiel an einem Festlager 22b ortsfest befestigt, das beispielsweise durch das Lagerteil 22 der Fadenführereinheit 10 gebildet sein kann. Der Bewegungsdämpfer 36 weist ein Gehäuse **38** mit einer zur Bewegungsachse 32 des Schlittens 30 im Wesentlichen parallel verlaufend angeordneten Gehäuselängsachse **40** auf. In einer Gehäuseaufnahme **42** des Gehäuses 38 ist ein elastomeres Dämpferelement **44** angeordnet. Das Dämpferelement 44 ist in das Gehäuse 38 lose eingelegt, kann im Gehäuse 38 aber beispielsweise auch im Presssitz gehalten angeordnet sein.
Das elastomere Dämpferelement 44 kann insbesondere aus einem geschlossen zelligen Polyurethanschaummaterial bestehen.

Das Dämpferelement 44 weist einzelne Dämpferlamellen **46** auf. Die Dämpferlamellen 46 stehen aus dem Gehäuse 38 in Richtung auf eine Reibfläche **48** des Schlittens 30 hervor und liegen mit ihren freien Enden an der Reibfläche 48 reibschlüssig an. Die Dämpferlamellen 46 sind zur Reibfläche 48 bzw. der Gehäuselängsachse 40 schräg verlaufend ausgerichtet und schließen in der gezeigten Spannstellung der Spannrolle 18 mit deren Bewegungsachse 32 und auch der Reibfläche 48 einen spitzen Winkel von ungefähr 60 ° ein.

Die Dämpferlamellen 46 weisen vorliegend in eine der Auslenkrichtung A der Spannrolle entgegengerichteten Rückstellrichtung R der Spannrolle 18. Bei einer Bewegung der Spannrolle 18 entlang ihrer Bewegungsachse 32 in Auslenkrichtung A ergeben sich so größere Reibwerte zwischen dem Bewegungsdämpfer 36 bzw. dessen Dämpferelement 44 und der Reibfläche 48 des Schlittens 30, als dies bei einer (Rückstell-)Bewegung der Spannrolle 18 in Rückstellrichtung R der Fall ist.

In Auslenkrichtung A der Spannrolle, stellen sich die Dämpferlamellen 46 relativ zur Reibfläche 48 und der Gehäuselängsachse 40 auf. Bei der durch das Vorspannelement 34 erzwungenen Rückstellbewegung werden die Dämpferlamellen 46 gegenüber der Reibfläche 48 weiter abgeklappt. Die Dämpferlamellen 46 gleiten dadurch vereinfacht an der Reibfläche 48 entlang , d.h., die Rückstellbewegung des Schlittens 30 mitsamt der Spannrolle 18 erfolgt gegen einen geringeren Reibwiderstand.

**Fig. 2** zeigt das Dämpferelement 44 aus Fig. 1 in einem in axialer Richtung unbelasteten Zustand (Spannstellung der Spannrolle) mit seinen an der Reibfläche 48 des Schlittens anliegenden Dämpferlamellen 46 in einer freigestellten perspektivischen Detailansicht.

Wie aus Fig. 1 hervorgeht, sind die Dämpferlamellen 46 sind in Richtung der Bewegungsachse 32 der nicht näher wiedergegebenen Spannrolle (Fig. 1) hintereinander regelmäßig beabstandet aufgereiht angeordnet. Die Dämpferlamellen 46 sind an ihren freien Enden **50** jeweils mit einer (scharfen) Kante **52** versehen.

Die Dämpferlamellen 46 sind einenends über einen Rückenabschnitt **54** des Dämpferelements 44 miteinander verbunden . Wie aus Fig. 2 hervorgeht, schließen die Dämpferlamellen mit der Reibfläche den (spitzen) Winkel α von ungefähr 60° ein. Die Dämpferlamellen sind bei dem gezeigten Ausführungsbeispiel unter Ausbildung von Spalten S ungefähr 0,3 mm voneinander beabstandet angeordnet. Die Spaltbreite kann auch kleiner oder größer als 0,3 mm betragen. Die Dämpferlamellen 46 weisen eine einheitliche Dicke **d** von ungefähr 2 mm und eine einheitliche Länge **l** von ungefähr 5 mm auf.

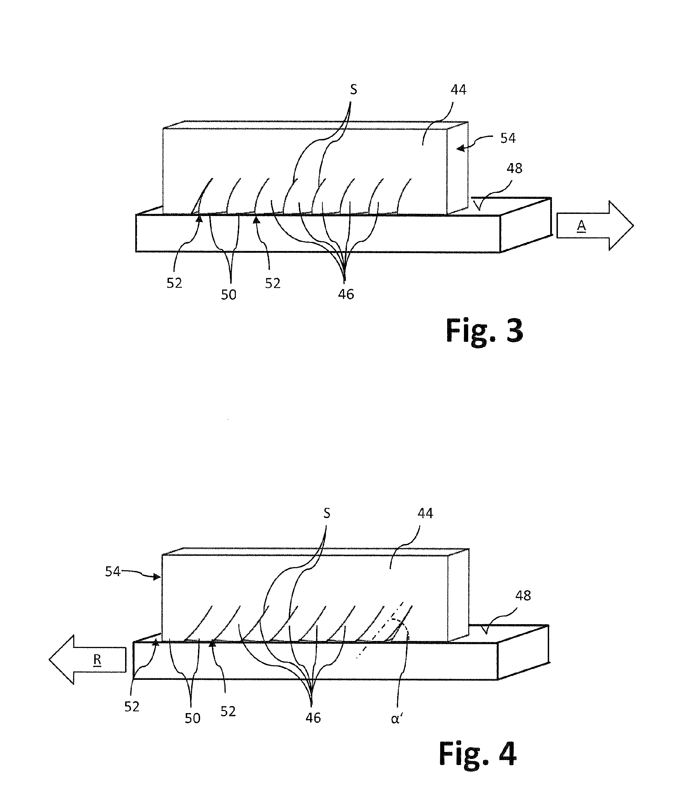

**Fig. 3** zeigt das Dämpferelement 44 während einer Auslenkbewegung der Spannrolle und des Schlittens (Fig. 1) in Auslenkrichtung A gegenüber dem ortsfest montierten Dämpferelement 44.

Gut zu erkennen ist, wie die Dämpferlamellen 46 durch den reibschlüssigen Kontakt ihrer freien Enden 50 gegenüber der Reibfläche 48 im Vergleich zur Darstellung in Fig. 2 zumindest abschnittsweise aufgerichtet sind und sich mit ihren Kanten 52 an der Reibfläche 48 verkanten. Der Reibungswiderstand zwischen dem Dämpferelement 44 und der Reibfläche 48 des Schlittens 30 ist dadurch größer als in der in Fig. 2 wiedergegebenen unbelasteten Stellung der Dämpferlamellen 46. Die Dämpferlamellen 46 sind durch die angreifenden Reibkräfte in gewissem Umfang in sich verbogen und zumindest teilweise in axialer Richtung aneinander abgestützt. Der im Gehäuse (Fig. 1) abgestützte Rückenabschnitt 54 des Dämpferelements 44 bildet für die Dämpferlamellen ein Widerlager in einer zur Reibfläche 48 orthogonalen Richtung.

**Fig. 4** zeigt das Dämpferelement 44 in freigestellter Ansicht bei einer zur Auslenkrichtung A der Spannrolle entgegengesetzten Rückstellbewegung R des Schlittens und der Spannrolle in Richtung auf deren Spannstellung (Figuren 1 und 2)

Die Dämpferlamellen 46 sind im Vergleich zu der Darstellung in der Figur 3 in einer entgegengesetzten Richtung gegenüber der Reibfläche 48 zumindest abschnittsweise abgeklappt (umgebogen) und schließen einen gegenüber dem Winkel α in Fig. 2 spitzeren Winkel α' mit der Reibfläche 48 ein. Die Dämpferlamellen 46 werden dadurch weniger stark an die Reibfläche 48 gepresst. Ein Reibwert zwischen dem Dämpferelement 46 und der Reibfläche 48 ist dadurch kleiner, als dies bei der Auslenkbewegung der Spannrolle 18 gemäß Fig 3 der Fall ist.

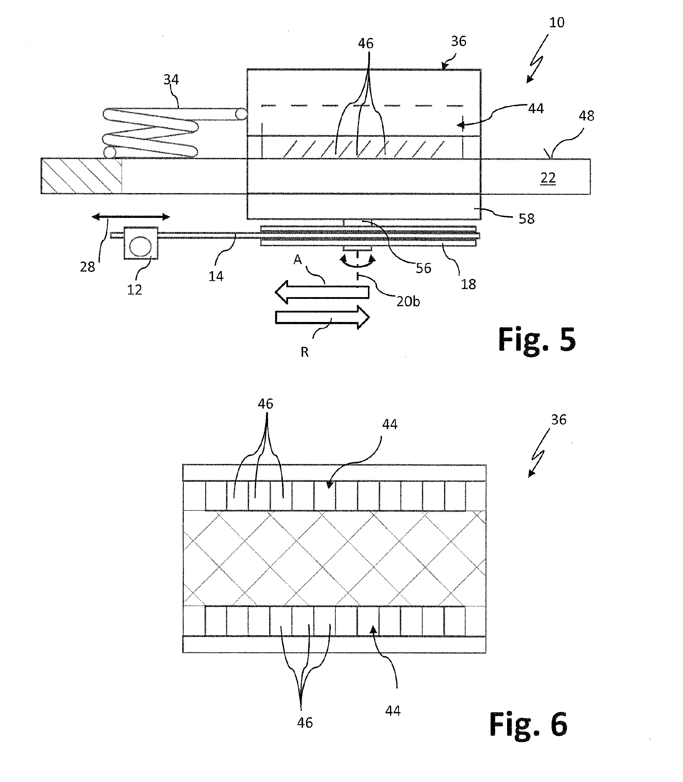

In **Fig. 5** ist eine weitere Fadenführereinheit 10 in einer ausschnittsweisen Seitenansicht gezeigt. Bei dieser Fadenführereinheit 10 ist die Spannrolle 18 über den Bewegungsdämpfer 36 am Lagerteil 22 entlang der Bewegungsachse verschiebbar angeordnet. Die Spannrolle 18 ist mit ihrem Achsstück **56** am Bewegungsdämpfer 36 verdrehbar gelagert und kann gemeinsam mit diesem aus der gezeigten Spannstellung in Auslenkrichtung A (translatorisch) ausgelenkt werden.

Der Bewegungsdämpfer 36 weist zwei elastomere Dämpferelemente 44 auf, von denen in Fig. 5 darstellungsbedingt nur eines wiedergegeben ist. Die Dämpferelemente 44 sind wie vorstehend erläutert, im Gehäuse 38 angeordnet und ragen aus diesem hervor. Die beiden Dämpferelemente 44 liegen mit ihren Dämpferlamellen 46 vorliegend an einer Reibfläche 48 an, die durch die Oberfläche des plattenförmigen Lagerteils 22 selbst gebildet ist. Die Dämpferlamellen weisen in Auslenkrichtung der Spannrolle 18. Der Bewegungsdämpfer 36 erstreckt sich durch eine nicht näher wiedergegebene Längsnut des plattenförmigen Lagerteils 22 und hintergreift dieses mit seinem Halteabschnitt **58** unterseitig. Das plattenförmige Lagerteil 22 ist somit zwischen den Dämpferelementen 44 und dem Halteabschnitt 58 des Bewegungsdämpfers 36 angeordnet. Die Spannrolle 18 ist zusammen mit dem als (Lager-)Schlitten wirkenden Bewegungsdämpfer 36 über das Vorspannelement 34 in der das Zugmittel 14 spannenden Spannstellung gehalten. Das Vorspannelement 34 ist vorliegend als Drehfeder ausgebildet. Die Funktionsweise der Dämpferelemente 44 entspricht der im Zusammenhang mit den Figuren 2 bis 4 beschriebenen Funktionsweise der dort gezeigten Dämpferelemente 44 mit dem wesentlichen Unterschied, dass vorliegend der Bewegungsdämpfer 36 bei einer Auslenkbewegung der Spannrolle 18 relativ zur Reibfläche 48 translatorisch mitverstellt wird. In den Figuren 3 und 4 sind die Auslenkrichtung A und die Rückstellrichtung R der Spannrolle 18 daher vertauscht.

**Fig. 6** zeigt eine Ansicht auf die beiden Dämpferelemente 44 des Bewegungsdämpfers 36 aus Fig. 5. Die beiden Dämpfungselemente 44 mit den einzelnen Dämpferlamellen46 sind gut zu erkennen.

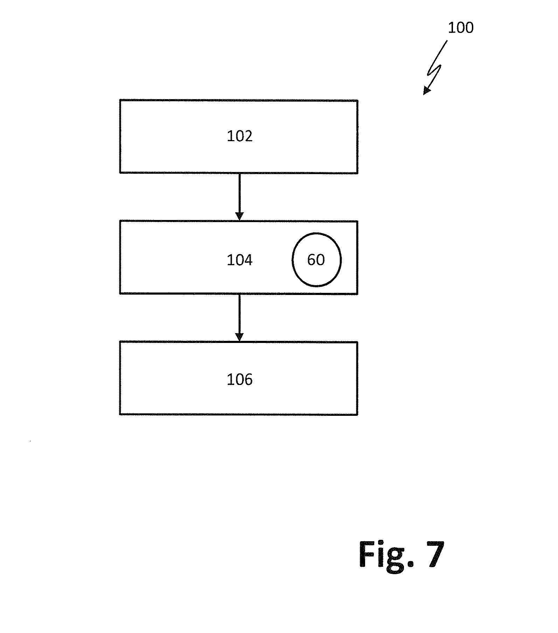

**Fig. 7** zeigt die Verfahrensschritte eines erfindungsgemäßen Verfahrens **100** zum Herstellen eines vorstehend erläuterten Bewegungsdämpfers.

In einem ersten Schritt **102** wird das Gehäuse 38 des Bewegungsdämpfers, beispielsweise im Wege eines Kunststoffspritzverfahrens, erzeugt und bereitgestellt. In einem weiteren Schritt **104** wird ein Dämpfungselement erzeugt, indem ein Kunststoffrohling **60** an einer seiner Seiten, beispielsweise mittels einer Klinge oder einer rotierenden Schneid- bzw. Fräsvorrichtung, bei zueinander paralleler Schnittführung mehrfach eingeschnitten wird.
In einem nachfolgenden Schritt **106** wird das Dämpferelement 44 in dem Gehäuse 38 angeordnet (eingesetzt). Der so erzeugte Bewegungsdämpfer 36 kann in der im Zusammenhang mit Fig. 1 oder mit Fig. 5 beschriebenen Weise an dem Lagerteil der Fadenführereinheit angeordnet werden.

## Patentansprüche

1. Fadenführereinheit (10),
- mit einem Fadenführer (12);
- mit einem Zugmittel (14), das um eine Umlenkrolle (16) und um eine Spannrolle (18) geführt ist und an dem der Fadenführer (12) befestigt ist;
- mit einem Antrieb (24) zum Hin- und Herbewegen des Zugmittels (14);
- mit einem Vorspannelement (34), durch das die Spannrolle (18) in einer das Zugmittel (14) spannenden Spannstellung gehalten ist, und
- mit einem Bewegungsdämpfer (36) für die Spannrolle (18), der ein elastomeres Dämpferelement (44) mit mehreren Dämpferlamellen (46) aufweist, wobei
die Dämpferlamellen (46) jeweils mit ihren freien Enden (50) an einer Reibfläche (48) der Fadenführereinheit (10) reibschlüssig anliegen, wobei die Dämpferlamellen(46) in der Spannposition der Spannrolle (18) jeweils unter einem spitzen Winkel (α) zur Reibfläche (48) verlaufend angeordnet und durch eine Verschiebebewegung der Spannrolle (18) aus ihrer Spannstellung gegenüber der Reibfläche (48) aufrichtbar sind.

2. Fadenführereinheit nach Anspruch 1, **dadurch gekennzeichnet, dass** die Dämpferlamellen (44) an ihren freien Enden (50) jeweils eine Kante (52) aufweisen.

3. Fadenführereinheit nach Anspruch 1 oder 2, **dadurch gekennzeichnet, dass** die Dämpferlamellen (44) in Richtung einer Bewegungsachse (32) der Spannrolle (18) hintereinander aufgereiht angeordnet sind.

4. Fadenführereinheit nach einem der vorhergehenden Ansprüche, **dadurch gekennzeichnet, dass** die Dämpferlamellen (46) jeweils weniger als 0,5 mm, insbesondere weniger als 0,3 mm, voneinander beabstandet angeordnet sind.

5. Fadenführereinheit nach einem der vorhergehenden Ansprüche, **dadurch gekennzeichnet**, das die Dämpferlamellen (46) eine, vorzugsweise einheitliche, Dicke von 1 mm bis 4 mm, bevorzugt von ungefähr 2 mm, aufweisen.

6. Fadenführereinheit nach einem der vorhergehenden Ansprüche, **dadurch gekennzeichnet**, das die Dämpferlamellen (46) eine, bevorzugt einheitliche, Länge von 5 bis 10 mm aufweisen.

7. Fadenführereinheit nach einem der vorhergehenden Ansprüche, **dadurch gekennzeichnet, dass** das Dämpferelement (44) aus einem Kunststoff, insbesondere aus einem Polyolefin, bevorzugt aus einem Polyurethan, besteht.

8. Fadenführereinheit nach einem der vorhergehenden Ansprüche, **dadurch gekennzeichnet, dass** das Dämpferelement (44) aus einem Schaummaterial besteht.

9. Fadenführereinheit nach einem der vorhergehenden Ansprüche, **dadurch gekennzeichnet, dass** das Dämpferelement (44) aus einem Elastomer, insbesondere aus Gummi, besteht.

10. Fadenführereinheit nach einem der vorhergehenden Ansprüche, **dadurch gekennzeichnet, dass** der Bewegungsdämpfer (36) ein Gehäuse (38) für das Dämpferelement (44) aufweist.

11. Fadenführereinheit nach Anspruch 10, **dadurch gekennzeichnet, dass** das Dämpferelement (44) in das Gehäuse lose eingelegt oder im Gehäuse (38) im Presssitz gehalten angeordnet ist.

12. Fadenführereinheit nach einem der vorhergehenden Ansprüche, **dadurch gekennzeichnet, dass** das Dämpferelement (44) mit einer variablen Vorspannung gegen die Reibfläche (48) vorspannbar ist.

13. Fadenführereinheit nach einem der vorhergehenden Ansprüche, **dadurch gekennzeichnet**, das der Bewegungsdämpfer (36) zwei oder mehr Dämpferelemente (44) aufweist.

14. Fadenführereinheit nach einem der vorhergehenden Ansprüche, **dadurch gekennzeichnet, dass** die Spannrolle (18) gemeinsam mit dem Bewegungsdämpfer (36) entlang einer Bewegungsachse (32) verschiebbar angeordnet ist.

15. Bewegungsdämpfer (36) für eine Fadenführereinheit nach einem der vorhergehenden Ansprüche, der ein Dämpferelement (44) mit einer Mehrzahl von Dämpferlamellen (46) aufweist.

16. Verfahren zum Herstellen eines Bewegungsdämpfers (36) nach Anspruch 15 mit den folgenden Verfahrensschritten:
- Erzeugen und Bereitstellen (102) eines Gehäuses (38);
- Bilden eines Dämpferelements (44), indem ein Kunststoffrohlings (60) an einer seiner Seiten bei paralleler Schnittführung mehrfach eingeschnitten wird; und
Einsetzen (106) oder Einpressen des Dämpferelements (44) in das Gehäuse (38).

## Claims

1. Thread guide unit (10) comprising
- a thread guide (12);
- a traction mechanism (14) which is guided around a deflection roller (16) and around a tension roller (18) and to which the thread guide (12) is fixed;
- a drive (24) for reciprocating the traction mechanism (14);
- a pretensioning element (34) which retains the tension roller (18) in a tensioned position tensioning the traction mechanism (14), and
- a motion damper (36) for the tension roller (18), the motion damper having an elastomeric damper element (44) with a plurality of damper lamellas (46), wherein
each free end (50) of the damper lamellas (46) abuts a friction surface (48) of the thread guide unit (10) in frictional engagement, wherein, in the tensioned position of the tension roller (18), each damper lamella (46) is arranged to extend at an acute angle (α) with respect to the friction surface (48) and can be erected with respect to the friction surface (48) out of its tensioned position by a displacement motion of the tension roller (18).

2. Thread guide unit according to claim 1, **characterized in that** the damper lamellas (44) each have an edge (52) at their free ends (50).

3. Thread guide unit according to claim 1 or 2, **characterized in that** the damper lamellas (44) are arranged one behind the other in the direction of an axis of movement (32) of the tension roller (18).

4. Thread guide unit according to any one of the preceding claims, **characterized in that** the damper lamellas (46) are arranged at a separation from each other of less than 0.5 mm, in particular, less than 0.3 mm in each case.

5. Thread guide unit according to any one of the preceding claims, **characterized in that** the damper lamellas (46) have a thickness, which is preferably uniform, of 1 mm to 4 mm, preferably of approximately 2 mm.

6. Thread guide unit according to any one of the preceding claims, **characterized in that** the damper lamellas (46) have a length, which is preferably uniform, of 5 to 10 mm.

7. Thread guide unit according to any one of the preceding claims, **characterized in that** the damper element (44) consists of plastic material, in particular, of a polyolefin, preferably of a polyurethane.

8. Thread guide unit according to any one of the preceding claims, **characterized in that** the damper element (44) consists of foam material.

9. Thread guide unit according to any one of the preceding claims, **characterized in that** the damper element (44) consists of an elastomer, in particular, of rubber.

10. Thread guide unit according to any one of the preceding claims, **characterized in that** the motion damper (36) comprises a housing (38) for the damper element (44).

11. Thread guide unit according to claim 10, **characterized in that** the damper element (44) is loosely inserted into the housing or is arranged in the housing (38) in a press-fit manner.

12. Thread guide unit according to any one of the preceding claims, **characterized in that** the damper element (44) can be pretensioned against the friction surface (48) with a variable pretension.

13. Thread guide unit according to any one of the preceding claims, **characterized in that** the motion damper (36) has two or more damper elements (44).

14. Thread guide unit according to any one of the preceding claims, **characterized in that** the tension roller (18) is arranged to be displaceable along an axis of movement (32) together with the motion damper (36).

15. Motion damper (36) for a thread guide unit according to any one of the preceding claims, the motion damper comprising a damper element (44) with a plurality of damper lamellas (46).

16. Method for producing a motion damper (36) according to claim 15 comprising the following process steps:
- generating and providing (102) a housing (38);
- forming a damper element (44) in that a plastic blank (60) is subjected to multiple incisions on one of its sides, the incisions extending parallel with respect to each other; and
- inserting (106) or pressing the damper element (44) into the housing (38).

## Revendications

1. Unité guide-fil (10) comprenant
- un guide-fil (12) ;
- un moyen de traction (14) qui est guidé autour d'un galet de renvoi (16) et autour d'un galet tendeur (18), et auquel ledit guide-fil (12) est fixé ;
- un entraînement (24) conçu pour imprimer des va-et-vient audit moyen de traction (14) ;
- un élément de précontrainte (34), par lequel ledit galet tendeur (18) est maintenu dans une position de tension bandant ledit moyen de traction (14), et
- un amortisseur de mouvements (36) qui est affecté audit galet tendeur (18) et présente un élément amortisseur (44) en élastomère, muni de plusieurs lamelles d'amortissement (46),
les lamelles d'amortissement (46) étant respectivement en applique avec frottement, par leurs extrémités libres (50), contre une surface de frottement (48) de l'unité guide-fil (10), sachant que lesdites lamelles d'amortissement (46) sont respectivement agencées avec étendue suivant un angle aigu (α) vis-à-vis de ladite surface de frottement (48) à l'emplacement de tension du galet tendeur (18), et peuvent être dressées, par rapport à ladite surface de frottement (48), par un mouvement coulissant dudit galet tendeur (18) lui faisant quitter sa position de tension.

2. Unité guide-fil selon la revendication 1, **caractérisée par le fait que** les lamelles d'amortissement (44) sont respectivement pourvues d'une arête (52) à leurs extrémités libres (50).

3. Unité guide-fil selon la revendication 1 ou 2, **caractérisée par le fait que** les lamelles d'amortissement (44) sont agencées en succession alignée dans la direction d'un axe de mouvement (32) du galet tendeur (18).

4. Unité guide-fil selon l'une des revendications précédentes, **caractérisée par le fait que** les lamelles d'amortissement (46) sont respectivement espacées les unes des autres d'une distance inférieure à 0,5 mm, notamment inférieure à 0,3 mm.

5. Unité guide-fil selon l'une des revendications précédentes, **caractérisée par le fait que** les lamelles d'amortissement (46) présentent une épaisseur préférentiellement unitaire mesurant de 1 mm à 4 mm et, de préférence, environ 2 mm.

6. Unité guide-fil selon l'une des revendications précédentes, **caractérisée par le fait que** les lamelles d'amortissement (46) présentent une longueur préférentiellement unitaire, mesurant de 5 à 10 mm.

7. Unité guide-fil selon l'une des revendications précédentes, **caractérisée par le fait que** l'élément amortisseur (44) consiste en un matière plastique, notamment en une polyoléfine, de préférence en un polyuréthane.

8. Unité guide-fil selon l'une des revendications précédentes, **caractérisée par le fait que** l'élément amortisseur (44) consiste en un matériau du type mousse.

9. Unité guide-fil selon l'une des revendications précédentes, **caractérisée par le fait que** l'élément amortisseur (44) consiste en un élastomère, notamment en du caoutchouc.

10. Unité guide-fil selon l'une des revendications précédentes, **caractérisée par le fait que** l'amortisseur de mouvements (36) est muni d'un boîtier (38) dédié à l'élément amortisseur (44).

11. Unité guide-fil selon la revendication 10, **caractérisée par le fait que** l'élément amortisseur (44) est inséré avec jeu dans le boîtier (38), ou est retenu dans ledit boîtier (38) avec assise serrée.

12. Unité guide-fil selon l'une des revendications précédentes, **caractérisée par le fait que** l'élément amortisseur (44) peut être précontraint contre la surface de frottement (48) avec une précontrainte variable.

13. Unité guide-fil selon l'une des revendications précédentes, **caractérisée par le fait que** l'amortisseur de mouvements (36) comporte des éléments amortisseurs (44) au nombre de deux ou plus.

14. Unité guide-fil selon l'une des revendications précédentes, **caractérisée par le fait que** le galet tendeur (18) est agencé avec faculté de coulissement, conjointement à l'amortisseur de mouvements (36), le long d'un axe de mouvement (32).

15. Amortisseur de mouvements (36) dédié à une unité guide-fil conforme à l'une des revendications précédentes, équipé d'un élément amortisseur (44) muni d'une pluralité de lamelles d'amortissement (46).

16. Procédé de fabrication d'un amortisseur de mouvements (36) conforme à la revendication 15, incluant les étapes opératoires suivantes :
- production et tenue en attente (102) d'un boîtier (38) ;
- formation d'un élément amortisseur (44) par entaillage répétitif d'une ébauche (60) en matière plastique sur l'un de ses côtés, avec tracé de sectionnement parallèle ; et
- insertion (106) ou enfoncement à force dudit élément amortisseur (44) dans ledit boîtier (38).
